# EUROPEAN PATENT SPECIFICATION

(11) **EP 4 020 723 B1**
(45) Date of publication and mention of the grant of the patent: **30.07.2025**
(21) Application number: 20860907.3
(22) Date of filing: 01.09.2020
(51) Int. Cl.: H01R 35/04, B60R 16/027, H01B 7/00, H01B 7/04, H01B 7/08

(54) **ROTARY CONNECTOR DEVICE AND FLAT CABLE ASSEMBLY FOR ROTARY CONNECTOR DEVICE**
DREHVERBINDERVORRICHTUNG UND FLACHKABELANORDNUNG FÜR EINE DREHVERBINDERVORRICHTUNG
DISPOSITIF DE CONNECTEUR ROTATIF ET ENSEMBLE CÂBLE PLAT POUR DISPOSITIF DE CONNECTEUR ROTATIF

(30) Priority: 05.09.2019 JP 2019161991
(43) Date of publication of application: 29.06.2022
(73) Proprietor: Furukawa Electric Co., Ltd., Tokyo 100-8322 (JP); Furukawa Automotive Systems Inc., Inukami-gun, Shiga 522-0242 (JP)
(72) Inventor: TAJIRI, Yoji, Inukami-gun, Shiga 522-0242 (JP); SHIOTANI, Yoshihiro, Inukami-gun, Shiga 522-0242 (JP); UTSUNOMIYA, Hirofumi, Inukami-gun, Shiga 522-0242 (JP)
(74) Representative: Weickmann & Weickmann PartmbB
(86) International application number: PCT/JP2020/033070
(87) International publication number: WO 2021/045047

(56) References cited:
- EP-A1- 1 993 877
- EP-A1- 3 093 932
- EP-A1- 3 432 423
- JP-A- 2000 294 357
- JP-A- 2002 043 008
- JP-A- 2009 529 774
- JP-A- H04 226 282
- JP-A- H11 329 654
- JP-B2- 3 889 231
- US-A- 5 944 544
- US-A- 6 109 942
- US-B2- 6 641 404

## Description

### Technical Field

The technology disclosed in the present application relates to a rotary connector device and a flat cable assembly for a rotary connector device.

### Background Art

Flexible flat cables used in rotary connector devices are known (see, for example, JP 3889231 B2).

### Citation List

US 6109 942A discloses a flat cable assembly according to the preamble of claim 1.

### Summary of Invention

### Technical Problem

However, in a flat cable described in JP 3889231 B2, a notch is provided in a conductor exposure section provided in an end portion to overlap two flat cables, and this increases the manufacturing cost.

An object of the technology disclosed in the present application is to reduce the manufacturing cost of a flat cable assembly for a rotary connector device.

### Solution to Problem

The invention provides flat cable assembly for a rotary connector device according to claim 1.

In a first aspect the flat cable assembly comprises a first lead block, a first flat cable, and a second flat cable. The first lead block includes a first lead block body and a first conductor that includes a first exposure surface exposed from the first lead block body and is attached to the first lead block body. The first flat cable includes a first cable end portion connected to the first exposure surface so as to extend from the first exposure surface in a first direction. The second flat cable includes a second cable end portion connected to the first exposure surface so as to extend from the first exposure surface in a second direction, which is different from the first direction.

In the flat cable assembly for a rotary connector device according to the first aspect, the second cable end portion extends from the first exposure surface in the second direction, which is different from the first direction in which the first cable end portion extends, and this can increase the degree of freedom in disposing the first flat cable and the second flat cable. Accordingly, the manufacturing cost of the flat cable assembly for a rotary connector device can be reduced.

A flat cable assembly for a rotary connector device according to a second aspect is the flat cable assembly for a rotary connector device according to the first aspect, wherein the second direction is substantially opposite to the first direction.

The flat cable assembly for a rotary connector device according to the second aspect can further increase the degree of freedom in disposing the first flat cable and the second flat cable.

A flat cable assembly for a rotary connector device according to a third aspect is the flat cable assembly for a rotary connector device according to the first or second aspect, wherein the second direction is substantially parallel to the first direction.

The flat cable assembly for a rotary connector device according to the third aspect can further increase the degree of freedom in disposing the first flat cable and the second flat cable.

In the flat cable assembly for a rotary connector device according to claim 1 and a fourth aspect the second cable end portion is disposed on the first exposure surface so as not to overlap with the first cable end portion.

In the flat cable assembly for a rotary connector device according to the fourth aspect, interference between the first cable end portion and the second cable end portion can be suppressed, and the degree of freedom in disposing the first flat cable and the second flat cable can be further increased.

A flat cable assembly for a rotary connector device according to a fifth aspect is the flat cable assembly for a rotary connector device according to the fourth aspect, wherein the first cable end portion includes a first conductive end. The second cable end portion includes a second conductive end. The second conductive end is disposed on the first exposure surface so as not to overlap with the first conductive end.

The flat cable assembly for a rotary connector device according to the fifth aspect can further increase the degree of freedom in disposing the first flat cable and the second flat cable while suppressing interference between the first cable end portion and the second cable end portion.

A flat cable assembly for a rotary connector device according to a sixth aspect is the flat cable assembly for a rotary connector device according to any one of the first to fifth aspects, wherein the first conductor includes a first protruding portion protruding from the first lead block body in a first protruding direction, which is different from at least one of the first direction and the second direction.

In the flat cable assembly for a rotary connector device according to the sixth aspect, other connectors can be connected to the flat cable assembly using the first protruding portion.

A flat cable assembly for a rotary connector device according to a seventh aspect is the flat cable assembly for a rotary connector device according to any one of the first to sixth aspects, wherein the second cable end portion extends from the first exposure surface in the second direction and is bent so as to extend further in the first direction.

In the flat cable assembly for a rotary connector device according to the seventh aspect, the first flat cable and the second flat cable can be formed compactly in the vicinity of the first lead block.

A flat cable assembly for a rotary connector device according to an eighth aspect is the flat cable assembly for a rotary connector device according to any one of the first to seventh aspects and further comprises a second lead block. The second lead block includes a second lead block body and a second conductor that includes a second exposure surface exposed from the second lead block body and is attached to the second lead block body. The first flat cable includes a third cable end portion connected to the second exposure surface so as to extend from the second exposure surface in a third direction. The second flat cable includes a fourth cable end portion connected to the second exposure surface so as to extend from the second exposure surface in a fourth direction, which is different from the third direction.

In the flat cable assembly for a rotary connector device according to the eighth aspect, the fourth cable end portion extends from the second exposure surface in the fourth direction, which is different from the third direction in which the third cable end portion extends, and thus the degree of freedom in disposing the first flat cable and the second flat cable can be increased. Accordingly, the manufacturing cost of the flat cable assembly for a rotary connector device can be reduced.

A flat cable assembly for a rotary connector device according to a ninth aspect is the flat cable assembly for a rotary connector device according to the eighth aspect, wherein the fourth direction is substantially opposite to the third direction.

The flat cable assembly for a rotary connector device according to the ninth aspect can further increase the degree of freedom in disposing the first flat cable and the second flat cable.

A flat cable assembly for a rotary connector device according to a tenth aspect is the flat cable assembly for a rotary connector device according to the eighth or ninth aspect, wherein the fourth direction is substantially parallel to the third direction.

The flat cable assembly for a rotary connector device according to the tenth aspect can further increase the degree of freedom in disposing the first flat cable and the second flat cable.

A flat cable assembly for a rotary connector device according to an eleventh aspect is the flat cable assembly for a rotary connector device according to any one of the eighth to tenth aspects, wherein the fourth cable end portion is disposed on the second exposure surface so as not to overlap with the third cable end portion.

The flat cable assembly for a rotary connector device according to the eleventh aspect can further increase the degree of freedom in disposing the first flat cable and the second flat cable while suppressing interference between the third cable end portion and the fourth cable end portion.

A flat cable assembly for a rotary connector device according to a twelfth aspect is the flat cable assembly for a rotary connector device according to the eleventh aspect, wherein the third cable end portion includes a third conductive end. The fourth cable end portion includes a fourth conductive end. The fourth conductive end is disposed on the second exposure surface so as not to overlap with the third conductive end.

The flat cable assembly for a rotary connector device according to the twelfth aspect can further increase the degree of freedom in disposing the first flat cable and the second flat cable while suppressing interference between the third cable end portion and the fourth cable end portion.

A flat cable assembly for a rotary connector device according to a thirteenth aspect is the flat cable assembly for a rotary connector device according to any one of the eighth to twelfth aspects, wherein the fourth cable end portion extends from the second exposure surface in the fourth direction and is bent so as to extend further in the third direction.

In the flat cable assembly for a rotary connector device according to the thirteenth aspect, the first flat cable and the second flat cable can be formed compactly in the vicinity of the second lead block.

A flat cable assembly for a rotary connector device according to a fourteenth aspect is the flat cable assembly for a rotary connector device according to any one of the eighth to thirteenth aspects, wherein the second conductor includes a second protruding portion protruding from the second lead block body in a second protruding direction, which is different from at least one of the third direction and the fourth direction.

In the flat cable assembly for a rotary connector device according to the fourteenth aspect, other connectors can be connected to the flat cable assembly using the second protruding portion.

A flat cable assembly for a rotary connector device according to a fifteenth aspect is the flat cable assembly for a rotary connector device according to any one of the eighth to fourteenth aspects, wherein the first flat cable extends from the first cable end portion to the third cable end portion. The second flat cable extends from the second cable end portion to the fourth cable end portion.

In the flat cable assembly for a rotary connector device according to the fifteenth aspect, the first lead block and the second lead block can be disposed at two ends of the first flat cable and at two ends of the second flat cable.

A rotary connector according to a sixteenth aspect comprises a stator, a rotator provided rotatably about a rotation axis with respect to the stator, and the flat cable assembly for a rotary connector device according to any one of the eighth to fifteenth aspects, the flat cable assembly being disposed at least partially within a cable housing space defined by the stator and the rotator. The first lead block is attached to the rotator. The second lead block is attached to the stator.

The rotary connector according to the sixteenth aspect can reduce the manufacturing cost of the flat cable assembly for a rotary connector device. Accordingly, the manufacturing cost of a rotary connector device can be reduced as well.

A flat cable assembly for a rotary connector device according to a seventeenth aspect is the flat cable assembly for a rotary connector device according to any one of the first to fifteenth aspects, wherein the length of the first flat cable is different from the length of the second flat cable.

### Advantageous Effects of Invention

The technology disclosed in the present application can reduce the manufacturing cost of a flat cable assembly for a rotary connector device.

### Brief Description of Drawings

FIG. 1 is a perspective view of a rotary connector device according to a first embodiment.
FIG. 2 is a cross-sectional view of the rotary connector device taken along a line **II-II** of FIG. 1.
FIG. 3 is a partial perspective view of a flat cable assembly for the rotary connector device illustrated in FIG. 1.
FIG. 4 is a partial perspective view of the flat cable assembly for the rotary connector device illustrated in FIG. 1.
FIG. 5 is a perspective view of the flat cable assembly for the rotary connector device illustrated in FIG. 1.
FIG. 6 is a partial perspective view of another flat cable assembly for the rotary connector device illustrated in FIG. 1.
FIG. 7 is a partial perspective view of the flat cable assembly for the rotary connector device illustrated in FIG. 1.
FIG. 8 is a perspective view of the flat cable assembly for the rotary connector device illustrated in FIG. 1.

### Description of Embodiments

Hereinafter, embodiments will be described with reference to the drawings. In the drawings, the same reference signs denote corresponding or identical components.

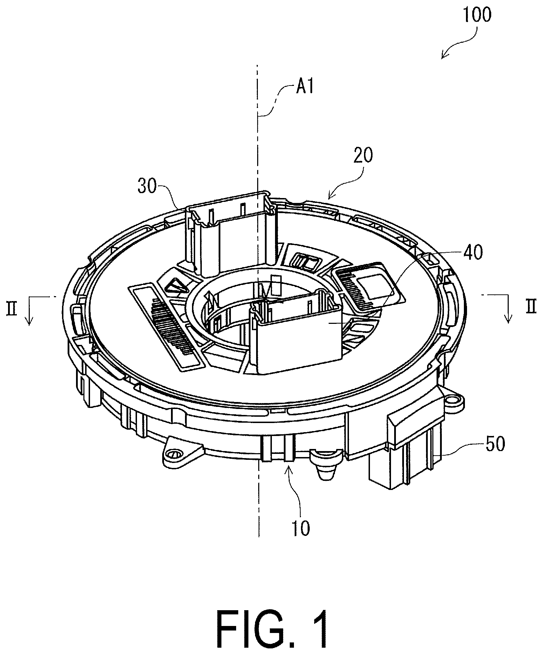

As illustrated in FIG. 1, a rotary connector device 100 comprises a stator 10 and a rotator 20. The rotator 20 is provided rotatably about a rotation axis A1 with respect to the stator 10. In the present embodiment, for example, the stator 10 is configured to be fixed to a vehicle body, and the rotator 20 is configured to be fixed to a steering wheel.

The rotary connector device 100 includes a first connector 30, a second connector 40, and a third connector 50. The first connector 30 and the second connector 40 are attached to the rotator 20. The first connector 30 and the second connector 40 are configured to be electrically connected to, for example, a steering side electric connector. The first connector 30 and the second connector 40 are electrically connected via the steering side electric connector to an electric circuit such as a switch of a steering wheel and an airbag device. The third connector 50 is attached to the stator 10. The third connector 50 is configured to be electrically connected to, for example, a vehicle body side electric connector. The third connector 50 is connected via a vehicle body side electric connector to electrical devices (for example, a control device and a battery) provided on the vehicle body.

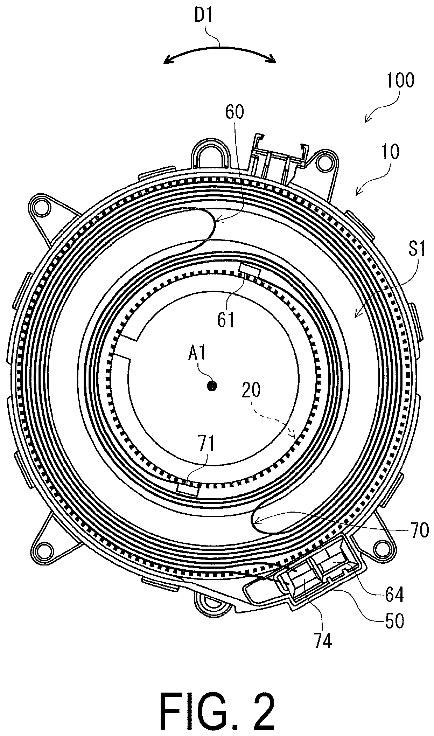

As illustrated in FIG. 2, the stator 10 and the rotator 20 define a cable housing space S1, which is provided so as to surround the rotation axis A1, between the stator 10 and the rotator 20. The rotary connector device 100 comprises a flat cable assembly 60 for a rotary connector device. The flat cable assembly 60 for a rotary connector device may also be referred to as a flat cable assembly 60. The flat cable assembly 60 is disposed at least partially within the cable housing space S1 defined by the stator and the rotator. For example, the cable housing space S1 is annular and extends in a circumferential direction D1 with respect to the rotation axis A1.

The flat cable assembly 60 is electrically connected to the first connector 30 and the third connector 50 (see FIG. 1). The flat cable assembly 60 is flexible and has a flat shape. The flat cable assembly 60 may also be referred to as a flexible flat cable.

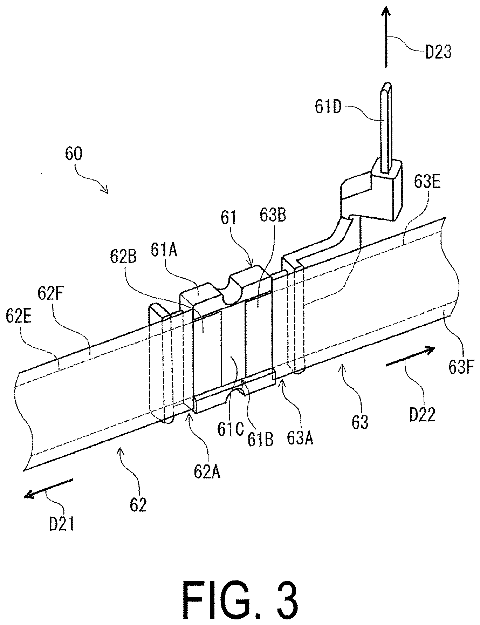

As illustrated in FIG. 3, the flat cable assembly 60 comprises a first lead block 61, a first flat cable 62, and a second flat cable 63. The first lead block 61 includes a first lead block body 61A and a first conductor 61B. The first conductor 61B has a first exposure surface 61C being exposed from the first lead block body 61A and is attached to the first lead block body 61A.

In the present embodiment, the first conductor 61B is disposed within the first lead block body 61A. The first lead block body 61A is formed of a non-metal material. For example, the first lead block body 61A is formed of a resin material having insulating properties. On the other hand, the first conductor 61B is formed of a metal material. The first conductor 61B is embedded in the first lead block body 61A by insertion molding. However, the structure of the first lead block 61 is not limited to the present embodiment.

The first flat cable 62 is flexible and has a flat cross-sectional shape. The second flat cable 63 is flexible and has a flat cross-sectional shape. The first flat cable 62 includes a first cable end portion 62A. The first cable end portion 62A is connected to the first exposure surface 61C so as to extend from the first exposure surface 61C in a first direction D21. The second flat cable 63 includes a second cable end portion 63A. The second cable end portion 63A is connected to the first exposure surface 61C so as to extend from the first exposure surface 61C in a second direction D22 different from the first direction D21.

In the present embodiment, the first cable end portion 62A includes a first conductive end 62B. The second cable end portion 63A includes a second conductive end 63B. The first conductive end 62B and the second conductive end 63B are connected to the first exposure surface 61C. For example, the first conductive end 62B and the second conductive end 63B are connected to the first exposure surface 61C by a joining structure such as solder or crimping.

In the present embodiment, the second direction D22 is substantially opposite to the first direction D21. The second direction D22 is substantially parallel to the first direction D21. More specifically, the second direction D22 is opposite the first direction D21. The second direction D22 is parallel to the first direction D21. However, the relationship between the first direction D21 and the second direction D22 is not limited to the present embodiment.

The second cable end portion 63A is disposed on the first exposure surface 61C so as not to overlap with the first cable end portion 62A. The second conductive end 63B is disposed on the first exposure surface 61C so as not to overlap with the first conductive end 62B. The second conductive end 63B is disposed apart from the first conductive end 62B.

The first conductor 61B includes a first protruding portion 61D. The first protruding portion 61D protrudes from the first lead block body 61A in a first protruding direction D23, which is different from at least one of the first direction D21 and the second direction D22. In the present embodiment, the first protruding direction D23 is different from the first direction D21 and the second direction D22. However, the relationship between the first direction D21, the second direction D22, and the first protruding direction D23 is not limited to the present embodiment. The first protruding direction D23 may be the same as at least one of the first direction D21 and the second direction D22.

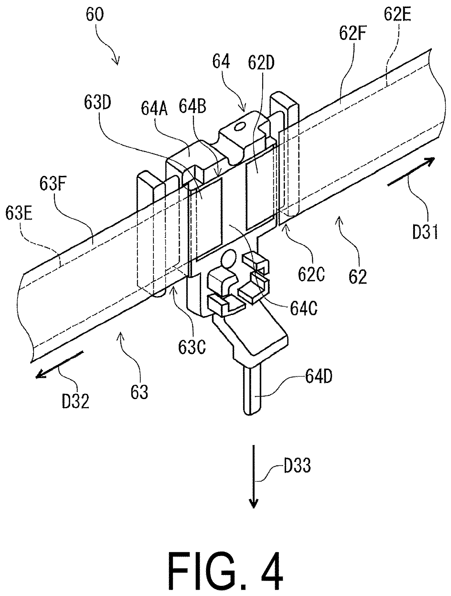

As illustrated in FIG. 4, the flat cable assembly 60 further comprises a second lead block 64. The second lead block 64 includes a second lead block body 64A and a second conductor 64B. The second conductor 64B has a second exposure surface 64C being exposed from the second lead block body 64A and is attached to the second lead block body 64A.

In the present embodiment, the second conductor 64B is disposed in the second lead block body 64A. The second lead block body 64A is formed of a non-metal material. For example, the second lead block body 64A is formed of a resin material having insulating properties. On the other hand, the second conductor 64B is formed of a metal material. The second conductor 64B is embedded in the second lead block body 64A by insertion molding. However, the structure of the second lead block 64 is not limited to the present embodiment.

The first flat cable 62 includes a third cable end portion 62C. The third cable end portion 62C is connected to the second exposure surface 64C so as to extend from the second exposure surface 64C in a third direction D31. The second flat cable 63 includes a fourth cable end portion 63C. The fourth cable end portion 63C is connected to the second exposure surface 64C so as to extend from the second exposure surface 64C in a fourth direction D32, which is different from the third direction D31.

In the present embodiment, the third cable end portion 62C includes a third conductive end 62D. The fourth cable end portion 63C includes a fourth conductive end 63D. The third conductive end 62D and the fourth conductive end 63D are connected to the second exposure surface 64C. For example, the third conductive end 62D and the fourth conductive end 63D are connected to the second exposure surface 64C by a joining structure such as solder or crimping.

In the present embodiment, the fourth direction D32 is substantially opposite to the third direction D31. The fourth direction D32 is substantially parallel to the third direction D31. More specifically, the fourth direction D32 is opposite the third direction D31. The fourth direction D32 is parallel to the third direction D31. However, the relationship between the third direction D31 and the fourth direction D32 is not limited to the present embodiment.

The fourth cable end portion 63C is disposed on the second exposure surface 64C so as not to overlap with the third cable end portion 62C. The fourth conductive end 63D is disposed on the second exposure surface 64C so as not to overlap with the third conductive end 62D. The fourth conductive end 63D is disposed apart from the third conductive end 62D.

The second conductor 64B includes a second protruding portion 64D. The second protruding portion 64D protrudes from the second lead block body 64A in a second protruding direction D33, which is different from at least one of the third direction D31 and the fourth direction D32. In the present embodiment, the second protruding direction D33 is different from the third direction D31 and the fourth direction D32. However, the relationship between the third direction D31, the fourth direction D32, and the second protruding direction D33 is not limited to the present embodiment. The second protruding direction D33 may be the same as at least one of the third direction D31 and the fourth direction D32.

As illustrated in FIG. 3 and FIG. 4, the first flat cable 62 includes a first lead wire 62E and a first covering portion 62F having insulating properties and covering the first lead wire 62E. The first lead wire 62E includes the first conductive end 62B and the third conductive end 62D.

The second flat cable 63 includes a second lead wire 63E and a second covering portion 63F having insulating properties and covering the second lead wire 63E. The second lead wire 63E includes the second conductive end 63B and the fourth conductive end 63D.

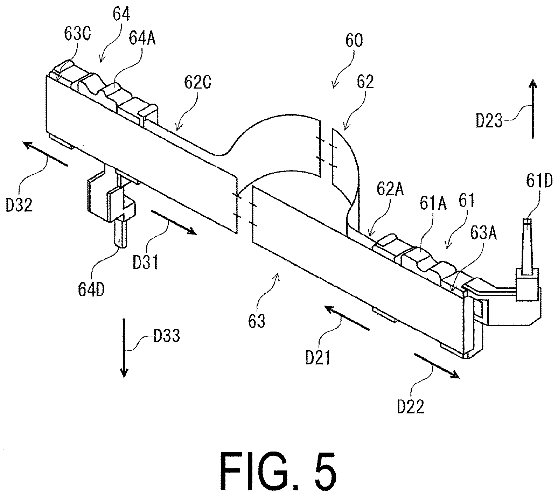

As illustrated in FIG. 5, the first flat cable 62 extends from the first cable end portion 62A to the third cable end portion 62C. The second flat cable 63 extends from the second cable end portion 63A to the fourth cable end portion 63C. The first flat cable 62 extends in a strip shape from the first cable end portion 62A to the third cable end portion 62C. The second flat cable 63 extends in a strip shape from the second cable end portion 63A to the fourth cable end portion 63C. In other words, the first cable end portion 62A and the third cable end portion 62C constitute two ends of the first flat cable 62. The second cable end portion 63A and the fourth cable end portion 63C constitute two ends of the second flat cable 63.

The second cable end portion 63A of the second flat cable 63 extends from the first exposure surface 61C in the second direction D22 and is bent so as to extend further in the first direction D21. Similarly, the fourth cable end portion 63C of the second flat cable 63 extends from the second exposure surface 64C in the fourth direction D32 and is bent so as to extend further in the third direction D31. Thus, in a state in which the first lead block 61, the second lead block 64, the first flat cable 62, and the second flat cable 63 are assembled, the second flat cable 63 overlaps with the first flat cable 62. Furthermore, in a state in which the flat cable assembly 60 is assembled, the second protruding direction D33 is opposite the first protruding direction D23. The length of the first flat cable 62 is different from the length of the second flat cable 63. In the present embodiment, the length of the first flat cable 62 is longer than the length of the second flat cable 63.

As illustrated in FIG. 2, in a state in which the flat cable assembly 60 is assembled to the stator 10 and the rotator 20, the first lead block 61 is attached to the rotator 20, and the second lead block 64 is attached to the stator 10. The flat cable assembly 60 is wound in the circumferential direction along a wall of the stator 10 and a wall of the rotator 20 in the cable housing space S1.

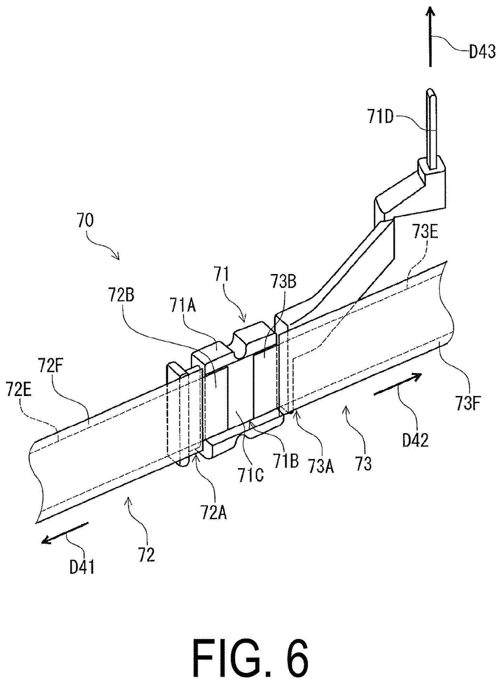

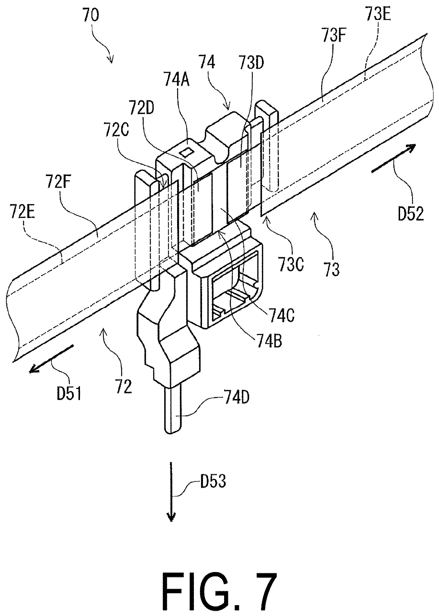

As illustrated in FIGS. 6 to 8, the rotary connector device 100 comprises a flat cable assembly 70 for a rotary connector device. The flat cable assembly 70 comprises a first lead block 71, a second lead block 74, a first flat cable 72, and a second flat cable 73. The first lead block 71, the second lead block 74, the first flat cable 72, and the second flat cable 73 of the flat cable assembly 70 has substantially the same structure as the first lead block 61, the second lead block 64, the first flat cable 62, and the second flat cable 63 of the flat cable assembly 60. Thus, a description of the first lead block 61, the second lead block 64, the first flat cable 62, and the second flat cable 63 can be substituted for a description of the first lead block 71, the second lead block 74, the first flat cable 72, and the second flat cable 73 by replacing "61", "62", "63", "64", "65", "66", "D21", "D22", "D23", "D31", "D32", and "D33" with "71", "72", "73", "74", "D41", "D42", "D43", "D51", "D52", and "D53", respectively.

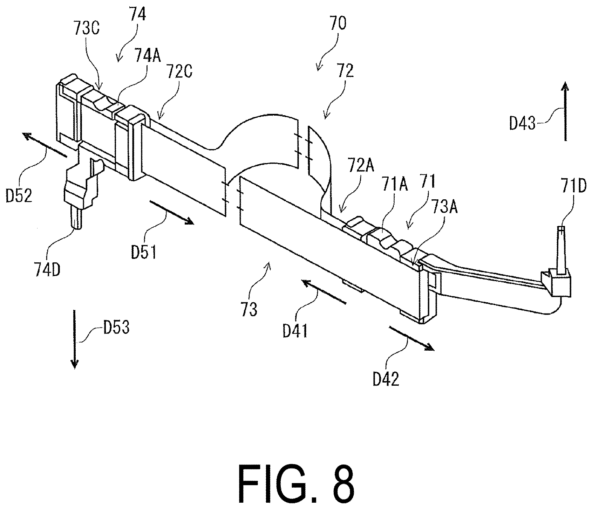

As illustrated in FIG. 8, a second cable end portion 73A of the second flat cable 73 extends in a second direction D42 from the first lead block 71, and then is bent in a first direction D41. Similarly, a fourth cable end portion 73C of the second flat cable 73 extends from the second lead block 74 in a fourth direction D52, and then is bent in a third direction D51. Thus, in a state in which the first lead block 71, the second lead block 74, the first flat cable 72, and the second flat cable 73 are assembled, the second flat cable 73 overlaps with the first flat cable 72. Furthermore, in a state in which the flat cable assembly 70 is assembled, a second protruding direction D53 is opposite a first protruding direction D43. The length of the first flat cable 72 is different from the length of the second flat cable 73. In the present embodiment, the length of the first flat cable 72 is longer than the length of the second flat cable 73.

The characteristics of the flat cable assembly 60 are as follows.
(1) As illustrated in FIGS. 3 to 5, the flat cable assembly 60 comprises the first lead block 61, the first flat cable 62, and the second flat cable 63. The first lead block 61 includes the first lead block body 61A and the first conductor 61B that includes the first exposure surface 61C exposed from the first lead block body 61A and is attached to the first lead block body 61A. The first flat cable 62 includes the first cable end portion 62A connected to the first exposure surface 61C so as to extend from the first exposure surface 61C in the first direction D21. The second flat cable 63 includes the second cable end portion 63A connected to the first exposure surface 61C so as to extend from the first exposure surface 61C in the second direction D22, which is different from the first direction D21.
   In the flat cable assembly 60, the second cable end portion 63A extends from the first exposure surface 61C in the second direction D22, which is different from the first direction D21 in which the first cable end portion 62A extends, and thus the degree of freedom in disposing the first flat cable 62 and the second flat cable 63 can be increased. This can reduce the manufacturing cost of the flat cable assembly 60.
(2) The second direction D22 is substantially opposite to the first direction D21, and thus the degree of freedom in disposing the first flat cable 62 and the second flat cable 63 can be further increased.
(3) The second direction D22 is substantially parallel to the first direction D21, and thus the degree of freedom of disposing the first flat cable 62 and the second flat cable 63 can be further increased.
(4) The second cable end portion 63A is disposed on the first exposure surface 61C so as not to overlap with the first cable end portion 62A. Accordingly, the degree of freedom in disposing the first flat cable 62 and the second flat cable 63 can be further increased while interference between the first cable end portion 62A and the second cable end portion 63A is suppressed.
(5) The first cable end portion 62A includes the first conductive end 62B. The second cable end portion 63A includes the second conductive end 63B. The second conductive end 63B is disposed on the first exposure surface 61C so as not to overlap with the first conductive end 62B. Accordingly, the degree of freedom in disposing the first flat cable 62 and the second flat cable 63 can be further increased while interference between the first cable end portion 62A and the second cable end portion 63A is suppressed.
(6) The first conductor 61B includes the first protruding portion 61D protruding from the first lead block body 61A in the first protruding direction D23, which is different from at least one of the first direction D21 and the second direction D22. Accordingly, other connectors can be connected to the flat cable assembly 60 using the first protruding portion 61D.
(7) The second cable end portion 63A extends from the first exposure surface 61C in the second direction D22 and is bent to extend further in the first direction D21. Accordingly, the first flat cable 62 and the second flat cable 63 can be formed compactly in the vicinity of the first lead block 61.
(8) The flat cable assembly 60 further comprises the second lead block 64. The second lead block 64 includes the second lead block body 64A and the second conductor 64B that includes the second exposure surface 64C exposed from the second lead block body 64A and is attached to the second lead block body 64A. The first flat cable 62 includes the third cable end portion 62C connected to the second exposure surface 64C so as to extend from the second exposure surface 64C in the third direction D31. The second flat cable 63 includes the fourth cable end portion 63C connected to the second exposure surface 64C so as to extend from the second exposure surface 64C in the fourth direction D32, which is different from the third direction D31.
   The fourth cable end portion 63C extends from the second exposure surface 64C in the fourth direction D32, which is different from the third direction D31 in which the third cable end portion 62C extends, and thus the degree of freedom in disposing the first flat cable 62 and the second flat cable 63 can be increased. This can reduce the manufacturing cost of the flat cable assembly 60.
(9) The fourth direction D32 is substantially opposite to the third direction D31, and thus the degree of freedom in disposing the first flat cable 62 and the second flat cable 63 can be further increased.
(10) The fourth direction D32 is substantially parallel to the third direction D31, and thus the degree of freedom in disposing the first flat cable 62 and the second flat cable 63 can be further increased.
(11) The fourth cable end portion 63C is disposed on the second exposure surface 64C so as not to overlap with the third cable end portion 62C. Accordingly, the degree of freedom in disposing the first flat cable 62 and the second flat cable 63 can be further increased while interference between the third cable end portion 62C and the fourth cable end portion 63C is suppressed.
(12) The third cable end portion 62C includes the third conductive end 62D. The fourth cable end portion 63C includes the fourth conductive end 63D. The fourth conductive end 63D is disposed on the second exposure surface 64C so as not to overlap with the third conductive end 62D. Accordingly, the degree of freedom in disposing the first flat cable 62 and the second flat cable 63 can be further increased while interference between the third cable end portion 62C and the fourth cable end portion 63C is suppressed.
(13) The fourth cable end portion 63C extends from the second exposure surface 64C in the fourth direction D32, and is bent to extend further in the third direction D31. Accordingly, the first flat cable 62 and the second flat cable 63 can be formed compactly in the vicinity of the second lead block 64.
(14) The second conductor 64B includes the second protruding portion 64D protruding from the second lead block body 64A in the second protruding direction D33, which is different from at least one of the third direction D31 and the fourth direction D32. Accordingly, other connectors can be connected to the flat cable assembly 60 using the second protruding portion 64D.
(15) The first flat cable 62 extends from the first cable end portion 62A to the third cable end portion 62C. The second flat cable 63 extends from the second cable end portion 63A to the fourth cable end portion 63C. Accordingly, the first lead block 61 and the second lead block 64 can be disposed at two ends of the first flat cable 62 and at two ends of the second flat cable 63.
(16) The rotary connector device 100 comprises the stator 10, the rotator 20 provided rotatably about the rotation axis A1 with respect to the stator 10, and the flat cable assembly 60 for a rotary connector device disposed at least partially in the cable housing space S1, which is defined by the stator 10 and the rotator 20.

The rotary connector device 100 can reduce the manufacturing cost of the flat cable assembly 60 for a rotary connector device. Accordingly, the manufacturing cost of the rotary connector device 100 can be reduced as well.

Note that the flat cable assembly 70, as with the flat cable assembly 60, can exhibit the effects of (1) to (16) described above.

Furthermore, although in the embodiment described above, the first flat cable 62 is a flat cable separate from the second flat cable 63, the first flat cable 62 and the second flat cable 63 may be an integral flat cable. For example, by connecting the third cable end portion 62C and the fourth cable end portion 63C, the first flat cable 62 and the second flat cable 63 may be configured as an integral flat cable. In such a case, for example, the integral flat cable includes an intermediate portion corresponding to the third cable end portion 62C and the fourth cable end portion 63C, the intermediate portion being connected to the second lead block 64. The same configuration can be applied to the first flat cable 72 with respect to the second flat cable 73.

It should be noted that, in the present application, "comprise" and its derivatives are non-limiting terms describing the presence of a component and do not exclude the presence of other components not described. This also applies to "have", "include" and their derivatives.

In the present application, a number such as "first" or "second" is merely a term for identifying a configuration, and does not have any other meaning (e.g., a particular order, or the like). For example, the presence of a "first element" does not imply that a "second element" exists, and the presence of a "second element" does not imply that a "first element" exists.

Expressions such as "parallel", "orthogonal", and "identical" in the present disclosure should not be interpreted strictly and include respectively the meanings of "substantially parallel", "substantially orthogonal", and "substantially identical". Further, representations of other arrangements are not to be strictly interpreted.

Furthermore, the expression "at least one of A and B" in the present disclosure encompasses, for example, all of (1) only A, (2) only B, and (3) both A and B. The expression "at least one of A, B, and C" encompasses, for example, all of (1) only A, (2) only B, (3) only C, (4) A and B, (5) B and C, (6) A and C, and (7) all of A, B, and C. In the present disclosure, the expression "at least one of A and B" is not interpreted as "at least one of A and at least one of B".

Various alterations and modifications of the present invention are apparent from the foregoing disclosure. Accordingly, the present invention may be implemented in a manner different from the specific disclosure of the present application without departing from the scope of the appended claims.

### Reference Signs List

100: Rotary connector device
10: Stator
20: Rotator
60, 70: Flat cable assembly for rotary connector device
61, 71: First lead block
61A, 71A: First lead block body
61B, 71B: First conductor
61C, 71C: First exposure surface
61D, 71D: First protruding portion
62, 72: First flat cable
62A, 72A: First cable end portion
62B, 72B: First conductive end
62C, 72C: Third cable end portion
62D, 72D: Third conductive end
62E, 72E: First lead wire
62F, 72F: First covering portion
63, 73: Second Flat cable
63A, 73A: Second cable end portion
63B, 73B: Second conductive end
63C, 73C: Fourth cable end portion
63D, 73D: Fourth conductive end
63E, 73E: Second lead wire
63F, 73F: Second covering portion
64, 74: Second lead block
64A, 74A: Second lead block body
64B, 74B: Second conductor
64C, 74C: Second exposure surface
64D, 74D: Second protruding portion
A1: Rotation axis
D1: Circumferential direction
D21: First direction
D22: Second direction
D23: First protruding direction
D31: Third direction
D32: Fourth direction
D33: Second protruding direction
D41: First direction
D42: Second direction
D43: First protruding direction
D51: Third direction
D52: Fourth direction
D53: Second protruding direction
S1: Cable housing space

## Claims

1. A flat cable assembly for a rotary connector device, comprising:
a first lead block (61,71) including a first lead block body (61A, 71A) and a first conductor (61B, 71B) including a first exposure surface (61C, 71C) exposed from the first lead block body, the first conductor being attached to the first lead block body;
a first flat cable (62,72) including a first cable end portion (62A, 72A) connected to the first exposure surface (61C, 71C) so as to extend from the first exposure surface in a first direction (D21, D41); and
a second flat cable (63, 73) including a second cable end portion (63A,73A) connected to the first exposure surface so as to extend from the first exposure surface in a second direction (D22, D42) that is different from the first direction,
**characterized in that** the second cable end portion (63A,73A) is disposed on the first exposure surface (61C, 71C) so as not to overlap with the first cable end portion (62A, 72A).

2. The flat cable assembly for a rotary connector device according to claim 1, wherein the second direction (D22, D42) is substantially opposite to the first direction (D21, D41).

3. The flat cable assembly for a rotary connector device according to claim 1 or 2, wherein the second direction (D22, D42) is substantially parallel to the first direction (D21, D41).

4. The flat cable assembly for a rotary connector device according to claim 1, wherein
the first cable end portion (62A, 72A) includes a first conductive end (62B, 72B),
the second cable end portion (63B, 73B) includes a second conductive end (63B, 73B), and
the second conductive end is disposed on the first exposure surface (61C) not to overlap with the first conductive end.

5. The flat cable assembly for a rotary connector device according to any one of claims 1 to 4, wherein the first conductor (61B, 71B) includes a first protruding portion (61D, 71D) protruding from the first lead block body (61A, 71A) in a first protruding direction (D23, D43) that is different from at least one of the first direction (D21, D41) and the second direction (D22, D42).

6. The flat cable assembly for a rotary connector device according to any one of claims 1 to 5, wherein the second cable end portion (63A, 73A) extends from the first exposure surface (61C, 71C) in the second direction (D22, D42) and is bent to extend further in the first direction (D21, D41).

7. The flat cable assembly for a rotary connector device according to any one of claims 1 to 6, further comprising:
a second lead block (64, 74) including a second lead block body (64A, 74A) and a second conductor (64B, 74B) that includes a second exposure surface (64C, 74C) exposed from the second lead block body, the second conductor being attached to the second lead block body, wherein
the first flat cable (62, 72) includes a third cable end portion (62C, 72C) connected to the second exposure surface to extend from the second exposure surface in a third direction (D31, D51), and
the second flat cable (63,73) includes a fourth cable end portion (63C, 73C) connected to the second exposure surface to extend from the second exposure surface in a fourth direction (D32, D52) that is different from the third direction (D31, D51).

8. The flat cable assembly for a rotary connector device according to claim 7, wherein the fourth direction (D32, D52) is substantially opposite to the third direction (D31, D51).

9. The flat cable assembly for a rotary connector device according to claim 7 or 8, wherein the fourth direction (D32, D52) is substantially parallel to the third direction (D31, D51).

10. The flat cable assembly for a rotary connector device according to any one of claims 7 to 9, wherein the fourth cable end portion (63C, 73C) is disposed on the second exposure surface (64C, 74C) not to overlap with the third cable end portion (62C, 72C).

11. The flat cable assembly for a rotary connector device according to claim 10, wherein
the third cable end portion (62C, 72C) includes a third conductive end (62D, 72D),
the fourth cable end portion (63C, 73C) includes a fourth conductive end (63D, 73D), and
the fourth conductive end is disposed on the second exposure surface not to overlap with the third conductive end.

12. The flat cable assembly for a rotary connector device according to any one of claims 7 to 11, wherein the fourth cable end portion (63C, 73C) extends from the second exposure surface in the fourth direction (D32, D52) and is bent to extend further in the third direction (D31, D51).

13. The flat cable assembly for a rotary connector device according to any one of claims 7 to 12, wherein the second conductor (64B, 74B) includes a second protruding portion (64D, 74D) protruding from the second lead block body in a second protruding direction (D33, D53) that is different from at least one of the third direction (D31, D51) and the fourth direction (D32, D52).

14. The flat cable assembly for a rotary connector device according to any one of claims 7 to 13, wherein
the first flat cable (62, 72) extends from the first cable end portion to the third cable end portion, and
the second flat cable (63, 73) extends from the second cable end portion to the fourth cable end portion.

15. A rotary connector device comprising:
a stator (10);
a rotator (20) provided rotatably about a rotation axis (A1) with respect to the stator; and
the flat cable assembly (60, 70) for a rotary connector device according to any one of claims 7 to 14, the flat cable assembly being disposed at least partially within a cable housing space (51) defined by the stator and the rotator,
the first lead block (61, 71) being attached to the rotator, and
the second lead block (64, 74) being attached to the stator.

16. The flat cable assembly for a rotary connector device according to any one of claims 1 to 14, wherein a length of the first flat cable (62, 72) is different from a length of the second flat cable (63, 73).

## Patentansprüche

1. Flachkabelanordnung für eine Drehverbindervorrichtung, umfassend:
einen ersten Leiterblock (61, 71), der einen ersten Leiterblockkörper (61A, 71A) und einen ersten Leiter (61B, 71B) enthält, der eine erste freiliegende Fläche (61C, 71C) enthält, die von dem ersten Leiterblockkörper freiliegt, wobei der erste Leiter an dem ersten Leiterblockkörper angebracht ist;
ein erstes Flachkabel (62, 72), das einen ersten Kabelendabschnitt (62A, 72A) enthält, der mit der ersten freiliegenden Fläche (61C, 71C) verbunden ist, um sich von der ersten freiliegenden Fläche in einer ersten Richtung (D21, D41) zu erstrecken; und
ein zweites Flachkabel (63, 73), das einen zweiten Kabelendabschnitt (63A, 73A) enthält, der mit der ersten freiliegenden Fläche verbunden ist, um sich von der ersten freiliegenden Fläche in einer zweiten Richtung (D22, D42) zu erstrecken, die sich von der ersten Richtung unterscheidet,
**dadurch gekennzeichnet, dass** der zweite Kabelendabschnitt (63A, 73A) auf der ersten freiliegenden Fläche (61C, 71C) so angeordnet ist, dass er mit dem ersten Kabelendabschnitt (62A, 72A) nicht überlappt.

2. Die Flachkabelanordnung für eine Drehverbindervorrichtung nach Anspruch 1, wobei die zweite Richtung (D22, D42) zur ersten Richtung (D21, D41) im Wesentlichen entgegengesetzt ist.

3. Die Flachkabelanordnung für eine Drehverbindervorrichtung nach Anspruch 1 oder 2, wobei die zweite Richtung (D22, D42) zur ersten Richtung (D21, D41) im Wesentlichen parallel ist.

4. Die Flachkabelanordnung für eine Drehverbindervorrichtung nach Anspruch 1, wobei
der erste Kabelendabschnitt (62A, 72A) ein erstes leitfähiges Ende (62B, 72B) enthält,
der zweite Kabelendabschnitt (63B, 73B) ein zweites leitfähiges Ende (63B, 73B) enthält und
das zweite leitfähige Ende auf der ersten freiliegenden Fläche (61C) mit dem ersten leitfähigen Ende nicht überlappend angeordnet ist.

5. Die Flachkabelanordnung für eine Drehverbindervorrichtung nach einem der Ansprüche 1 bis 4, wobei der erste Leiter (61B, 71B) einen ersten vorstehenden Abschnitt (61D, 71D) enthält, der von dem ersten Leiterblockkörper (61A, 71A) in einer ersten Vorsprungsrichtung (D23, D43) vorsteht, die sich von zumindest einer der ersten Richtung (D21, D41) und der zweiten Richtung (D22, D42) unterscheidet.

6. Die Flachkabelanordnung für eine Drehverbindervorrichtung nach einem der Ansprüche 1 bis 5, wobei sich der zweite Kabelendabschnitt (63A, 73A) von der ersten freiliegenden Fläche (61C, 71C) in der zweiten Richtung (D22, D42) erstreckt und gebogen ist, um sich weiter in der ersten Richtung (D21, D41) zu erstrecken.

7. Die Flachkabelanordnung für eine Drehverbindervorrichtung nach einem der Ansprüche 1 bis 6, die ferner aufweist:
einen zweiten Leiterblock (64, 74), der einen zweiten Leiterblockkörper (64A, 74A) und einen zweiten Leiter (64B, 74B) enthält, der eine zweite freiliegende Fläche (64C, 74C) enthält, die von dem zweiten Leiterblockkörper freiliegt, wobei der zweite Leiter an dem zweiten Leiterblockkörper angebracht ist, wobei
das erste Flachkabel (62, 72) einen dritten Kabelendabschnitt (62C, 72C) enthält, der mit der zweiten freiliegenden Fläche verbunden ist, um sich von der zweiten freiliegenden Fläche in einer dritten Richtung (D31, D51) zu erstrecken, und
das zweite Flachkabel (63, 73) einen vierten Kabelendabschnitt (63C, 73C) enthält, der mit der zweiten freiliegenden Fläche verbunden ist, um sich von der zweiten freiliegenden Fläche in einer vierten Richtung (D32, D52) zu erstrecken, die sich von der dritten Richtung (D31, D51) unterscheidet.

8. Die Flachkabelanordnung für eine Drehverbindervorrichtung nach Anspruch 7, wobei die vierte Richtung (D32, D52) zur dritten Richtung (D31, D51) im Wesentlichen entgegengesetzt ist.

9. Die Flachkabelanordnung für eine Drehverbindervorrichtung nach Anspruch 7 oder 8, wobei die vierte Richtung (D32, D52) zur dritten Richtung (D31, D51) im Wesentlichen parallel ist.

10. Die Flachkabelanordnung für eine Drehverbindervorrichtung nach einem der Ansprüche 7 bis 9, wobei der vierte Kabelendabschnitt (63C, 73C) auf der zweiten freiliegenden Fläche (64C, 74C) mit dem dritten Kabelendabschnitt (62C, 72C) nicht überlappend angeordnet ist.

11. Die Flachkabelanordnung für eine Drehverbindervorrichtung nach Anspruch 10, wobei
der dritte Kabelendabschnitt (62C, 72C) ein drittes leitfähiges Ende (62D, 72D) enthält,
der vierte Kabelendabschnitt (63C, 73C) ein viertes leitfähiges Ende (63D, 73D) enthält, und
das vierte leitfähige Ende auf der zweiten freiliegenden Fläche mit dem dritten leitfähigen Ende nicht überlappend angeordnet ist.

12. Die Flachkabelanordnung für eine Drehverbindervorrichtung nach einem der Ansprüche 7 bis 11, wobei sich der vierte Kabelendabschnitt (63C, 73C) von der zweiten freiliegenden Fläche in der vierten Richtung (D32, D52) erstreckt und gebogen ist, um sich weiter in der dritten Richtung (D31, D51) zu erstrecken.

13. Die Flachkabelanordnung für eine Drehverbindervorrichtung nach einem der Ansprüche 7 bis 12, wobei der zweite Leiter (64B, 74B) einen zweiten vorstehenden Abschnitt (64D, 74D) enthält , der von dem zweiten Leiterblockkörper in einer zweiten Vorsprungsrichtung (D33, D53) vorsteht, die sich von zumindest einer der dritten Richtung (D31, D51) und der vierten Richtung (D32, D52) unterscheidet.

14. Die Flachkabelanordnung für eine Drehverbindervorrichtung nach einem der Ansprüche 7 bis 13, wobei
sich das erste Flachkabel (62, 72) von dem ersten Kabelendabschnitt zu dem dritten Kabelendabschnitt erstreckt, und
sich das zweite Flachkabel (63, 73) von dem zweiten Kabelendabschnitt zu dem vierten Kabelendabschnitt erstreckt.

15. Drehverbindervorrichtung, welche aufweist:
einen Stator (10);
einen Rotor (20), der um eine Rotationsachse (A1) in Bezug auf den Stator drehbar vorgesehen ist; und
die Flachkabelanordnung (60, 70) für eine Drehverbindungsvorrichtung nach einem der Ansprüche 7 bis 14, wobei die Flachkabelanordnung zumindest teilweise innerhalb eines Kabelaufnahmeraums (51) angeordnet ist, der durch den Stator und den Rotor definiert ist,
der erste Leiterblock (61, 71) an dem Rotor angebracht ist, und
der zweite Leiterblock (64, 74) an dem Stator angebracht ist.

16. Die Flachkabelanordnung für eine Drehverbindervorrichtung nach einem der Ansprüche 1 bis 14, wobei sich eine Länge des ersten Flachkabels (62, 72) von einer Länge des zweiten Flachkabels (63, 73) unterscheidet.

## Revendications

1. Ensemble de câbles plats pour un dispositif de connecteur rotatif, comprenant :
un premier bloc de connexion (61, 71) comprenant un premier corps de bloc de connexion (61A, 71A) et un premier conducteur (61B, 71B) comprenant une première surface d'exposition (61C, 71C) exposée à partir du premier corps de bloc de connexion, le premier conducteur étant fixé au premier corps de bloc de connexion ;
un premier câble plat (62, 72) comprenant une première partie d'extrémité de câble (62A, 72A) raccordée à la première surface d'exposition (61C, 71C) afin de s'étendre à partir de la première surface d'exposition dans une première direction (D21, D41) ; et
un second câble plat (63, 73) comprenant une deuxième partie d'extrémité de câble (63A, 73A) raccordée à la première surface d'exposition afin de s'étendre à partir de la première surface d'exposition dans une deuxième direction (D22, D42) qui est différente de la première direction,
**caractérisé en ce que** la deuxième partie d'extrémité de câble (63A, 73A) est disposée sur la première surface d'exposition (61C, 71C) afin de ne pas chevaucher avec la première partie d'extrémité de câble (62A, 72A).

2. Ensemble de câbles plats pour un dispositif de connecteur rotatif selon la revendication 1, dans lequel la deuxième direction (D22, D42) est sensiblement opposée à la première direction (D21, D41).

3. Ensemble de câbles plats pour un dispositif de connecteur rotatif selon la revendication 1 ou 2, dans lequel la deuxième direction (D22, D42) est sensiblement parallèle à la première direction (D21, D41).

4. Ensemble de câbles plats pour un dispositif de connecteur rotatif selon la revendication 1, dans lequel :
la première partie d'extrémité de câble (62A, 72A) comprend une première extrémité conductrice (62B, 72B),
la deuxième partie d'extrémité de câble (63B, 73B) comprend une deuxième extrémité conductrice (63B, 73B), et
la deuxième extrémité conductrice est disposée sur la première surface d'exposition (61C) pour ne pas chevaucher avec la première extrémité conductrice.

5. Ensemble de câbles plats pour un dispositif de connecteur rotatif selon l'une quelconque des revendications 1 à 4, dans lequel le premier conducteur (61B, 71B) comprend une première partie en saillie (61D, 71D) faisant saillie du premier corps de bloc de connexion (61A, 71A) dans une première direction de saillie (D23, D43) qui est différente d'au moins l'une parmi la première direction (D21, D41) et la deuxième direction (D22, D42).

6. Ensemble de câbles plats pour un dispositif de connecteur rotatif selon l'une quelconque des revendications 1 à 5, dans lequel la deuxième partie d'extrémité de câble (63A, 73A) s'étend à partir de la première surface d'exposition (61C, 71C) dans la deuxième direction (D22, D42) et est pliée pour s'étendre davantage dans la première direction (D21, D41).

7. Ensemble de câbles plats pour un dispositif de connecteur rotatif selon l'une quelconque des revendications 1 à 6, comprenant en outre :
un second bloc de connexion (64, 74) comprenant un second corps de bloc de connexion (64A, 74A) et un second conducteur (64B, 74B) qui comprend une seconde surface d'exposition (64C, 74C) exposée à partir du second corps de bloc de connexion, le second conducteur étant fixé au second corps de bloc de connexion, dans lequel :
le premier câble plat (62, 72) comprend une troisième partie d'extrémité de câble (62C, 72C) raccordée à la seconde surface d'exposition pour s'étendre à partir de la seconde surface d'exposition dans une troisième direction (D31, D51), et
le second câble plat (63, 73) comprend une quatrième partie d'extrémité de câble (63C, 73C) raccordée à la seconde surface d'exposition pour s'étendre à partir de la seconde surface d'exposition dans une quatrième direction (D32, D52) qui est différente de la troisième direction (D31, D51).

8. Ensemble de câbles plats pour un dispositif de connecteur rotatif selon la revendication 7, dans lequel la quatrième direction (D32, D52) est sensiblement opposée à la troisième direction (D31, D51).

9. Ensemble de câbles plats pour un dispositif de connecteur rotatif selon la revendication 7 ou 8, dans lequel la quatrième direction (D32, D52) est sensiblement parallèle à la troisième direction (D31, D51).

10. Ensemble de câbles plats pour un dispositif de connecteur rotatif selon l'une quelconque des revendications 7 à 9, dans lequel la quatrième partie d'extrémité de câble (63C, 73C) est disposée sur la seconde surface d'exposition (64C, 74C) pour ne pas chevaucher avec la troisième partie d'extrémité de câble (62C, 72C).

11. Ensemble de câbles plats pour un dispositif de connecteur rotatif selon la revendication 10, dans lequel :
la troisième partie d'extrémité de câble (62C, 72C) comprend une troisième extrémité conductrice (62D, 72D),
la quatrième partie d'extrémité de câble (63C, 73C) comprend une quatrième extrémité conductrice (63D, 73D), et
la quatrième extrémité conductrice est disposée sur la seconde surface d'exposition pour ne pas chevaucher avec la troisième extrémité conductrice.

12. Ensemble de câbles plats pour un dispositif de connecteur rotatif selon l'une quelconque des revendications 7 à 11, dans lequel la quatrième partie d'extrémité de câble (63C, 73C) s'étend à partir de la seconde surface d'exposition dans la quatrième direction (D32, D52) et est pliée pour s'étendre davantage dans la troisième direction (D31, D51).

13. Ensemble de câbles plats pour un dispositif de connecteur rotatif selon l'une quelconque des revendications 7 à 12, dans lequel le second conducteur (64B, 74B) comprend une seconde partie en saillie (64D, 74D) faisant saillie du second corps de bloc de connexion dans une seconde direction de saillie (D33, D53) qui est différente d'au moins l'une parmi la troisième direction (D31, D51) et la quatrième direction (D32, D52).

14. Ensemble de câbles plats pour un dispositif de connecteur rotatif selon l'une quelconque des revendications 7 à 13, dans lequel :
le premier câble plat (62, 72) s'étend à partir de la première partie d'extrémité de câble jusqu'à la troisième partie d'extrémité de câble, et
le second câble plat (63, 73) s'étend à partir de la deuxième partie d'extrémité de câble jusqu'à la quatrième partie d'extrémité de câble.

15. Dispositif de connecteur rotatif comprenant :
un stator (10) ;
un rotor (20) prévu en rotation autour d'un axe de rotation (A1) par rapport au stator ; et
l'ensemble de câbles plats (60, 70) pour un dispositif de connecteur rotatif selon l'une quelconque des revendications 7 à 14, l'ensemble de câbles plats étant disposé au moins partiellement dans un espace de logement de câble (51) défini par le stator et le rotor,
le premier bloc de connexion (61, 71) étant fixé au rotor, et
le second bloc de connexion (64, 74) étant fixé au stator.

16. Ensemble de câbles plats pour un dispositif de connecteur rotatif selon l'une quelconque des revendications 1 à 14, dans lequel une longueur du premier câble plat (62, 72) est différente d'une longueur du second câble plat (63, 73).
